# EUROPEAN PATENT APPLICATION

(11) **EP 3 340 731 A1**
(43) Date of publication of application: **27.06.2018**
(21) Application number: 16836900.7
(22) Date of filing: 12.07.2016
(51) Int. Cl.: H04W 76/06, H04W 8/20, H04W 88/18, H04W 92/12

(54) **WIRELESS COMMUNICATION SYSTEM, WIRELESS BASE STATION, MOBILITY MANAGEMENT ENTITY, USER DEVICE, AND COMMUNICATION CONTROL METHOD**

(30) Priority: 17.08.2015 JP 2015160502
(71) Applicant: NTT DOCOMO, INC., Chiyoda-ku Tokyo 100-6150 (JP)
(72) Inventor: KOSHIMIZU, Takashi, Tokyo 100-6150 (JP); ALI, Irfan, Sisli Istanbul, 34373 (TR); HUSAIN, Syed, Chicago, Illinois 60605 (US)
(74) Representative: Hoffmann Eitle
(86) International application number: PCT/JP2016/070504
(87) International publication number: WO 2017/029908

(57) **Abstract**

Provided is a radio communication system, a radio base station, a mobility management entity, a user device, and a communication control method in which an idle user device can be quickly and reliably returned to a connected state in a configuration in which a huge number of user devices (UE) are connected to a radio network such as in CIoT. The communication control method includes forwarding, when UE has transitioned from a connected state to an idle state, in which eNB forwards to MME AS Context that is a context of an access layer between the UE and the eNB; transmitting in which the MME transmits the AS Context to the eNB in response to an acquisition request of the AS Context from the eNB; and causing the eNB to return the UE to the connected state by using the AS Context transmitted from the MME.

## Description

### TECHNICAL FIELD

The present invention relates to a radio communication system, a radio base station, a mobility management entity, a user device, and a communication control method capable of supporting CIoT.

### BACKGROUND ART

In the 3rd Generation Partnership Project (3GPP), a technical study for realizing Cellular Internet of Things (CIoT) optimized for connecting not only conventional mobile communication terminals such as Machine Type Communications (MTC) terminals but also various types of user devices (UE) is being performed (for example, see Non-Patent Document 1).

In this technical study, it has been proposed to transmit and receive information of C-plane and U-plane via an interface (S1) of a radio access network for CIoT (CIoT RAT) and a core network for CIoT (CIoT CN) in the same manner as in the past. This proposal is advantageous in that the compatibility with the existing core network is high, and shifting to the CIoT can be performed easily.

It is expected that a huge number of UEs (CIoT UEs) will be connected to CIoT, and the following problems will arise if the specifications of the current Long Term Evolution (LTE) are followed. That is, when the UE transitions from a connected state, in which it is connected to a radio network (radio access network and core network), to an idle state, in which it is not connected to the radio network, this UE and a radio base station (eNB) to which this UE was connected delete AS Context that is context of an access layer (Access Stratum (AS)) between the UE and the eNB.

Therefore, when the UE returns from the idle state to the connected state, it is necessary to again perform between the UE and the eNB a setting (security and the like) relating to the AS, and the UE takes a long time to return to the connected state.

In order to address that issue, it has been proposed that both the UE and the eNB connected to the UE retain the AS Context of the UE without deleting them even when the UE has transitioned to the idle state.

### PRIOR ART DOCUMENT

### NON-PATENT DOCUMENT

Non-Patent Document 1: 3GPP TR 23.720 V0.1.0 3rd Generation Partnership Project; Technical Specification Group Services and System Aspects; Architecture enhancements for Cellular Internet of Things; (Release 13), 3GPP, July 2015

### SUMMARY OF THE INVENTION

However, this method in which both the UE and the eNB to which the UE was connected retain the AS Context of the UE without deleting the same even when the UE has transitioned to the idle state has the following problems.

When the eNB to be connected to the UE when the idle UE returns to the connected state is different from eNB to which the UE was connected when the UE transitioned to the idle state, this new eNB to be connected cannot immediately use the AS Context retained by the eNB connected at the time of transition. Therefore, after all, it is necessary to again execute the setting relating to the AS between the UE and the eNB, and the UE takes a long time to return to the connected state.

Moreover, in this manner, when the eNB to be connected is changed, because the AS Context retained by the eNB at the time of transition cannot be reused immediately in the eNB to be connected, even when the AS Context is to be reused, this method cannot handle the situation well.

The present invention has been made in view of the above discussion. One object of the present invention is to provide a radio communication system, a radio base station, a mobility management entity, a user device, and a communication control method in which an idle user device can be quickly and reliably returned to a connected state in a configuration in which a huge number of user devices (UE) are connected to a radio network such as in the CIoT.

A radio communication system according to one aspect of the present invention includes a radio base station that performs radio communication with a user device via an access layer and a mobility management entity that manages mobility of the user device. The radio base station includes a state controlling unit that controls the user device so as to be in one of a connected state and an idle state; and a context forwarding unit that, when the user device transitions from the connected state to the idle state, forwards to the mobility management entity AS context that is a context of the access layer between the user device and the radio base station. The mobility management entity includes a context retaining unit that retains the AS context forwarded from the radio base station; and a context transmitting unit that transmits to the radio base station the AS context retained in the context retaining unit in response to an acquisition request of the AS context from the radio base station. The state controlling unit returns the user device to the connected state by using the AS context transmitted from the mobility management entity.

### BRIEF DESCRIPTION OF DRAWINGS

FIG. 1 is an overall structural diagram of a radio communication system 10.
FIG. 2 is a functional block diagram of eNB 100.
FIG. 3 is a functional block diagram of MME 200.
FIG. 4 is a functional block diagram of S/PGW 300.
FIG. 5 is a functional block diagram of UE 20.
FIG. 6 is a diagram showing a processing sequence of AS Context when the UE 20 has transitioned from a connected state to an idle state.
FIG. 7 is a diagram showing a processing sequence of the AS Context when the UE 20 returns from the idle state to the connected state.
FIG. 8 is an explanatory diagram (Operation Example 1) of a retained state of the AS Context when the UE 20 has transitioned from the connected state to the idle state and thereafter has returned to the connected state.
FIG. 9 is a diagram showing a processing sequence of ESM Context when the UE 20 has transitioned from the connected state to the idle state.
FIG. 10 is a diagram showing a processing sequence of the ESM Context when the UE 20 returns from the idle state to the connected state.
FIG. 11 is an explanatory diagram (Operation Example 2) of a retained state of the ESM Context when the UE 20 has transitioned from the connected state to the idle state and thereafter has returned to the connected state.
FIG. 12 is an explanatory diagram (Operation Example 3) of a retained state of the AS Context and the ESM Context when the UE 20 has transitioned from the connected state to the idle state and thereafter has returned to the connected state.
FIG. 13 is a diagram showing an example of a hardware configuration of the UE 20, the eNB 100, the MME 200, and the S/PGW 300.

### MODES FOR CARRYING OUT THE INVENTION

Exemplary embodiments are explained below with reference to the accompanying drawings. In the drawings, structural elements having the same function or configuration are indicated by the same or similar reference numerals and the explanation thereof is appropriately omitted.

### (1) Overall Structural Configuration of Radio Communication System

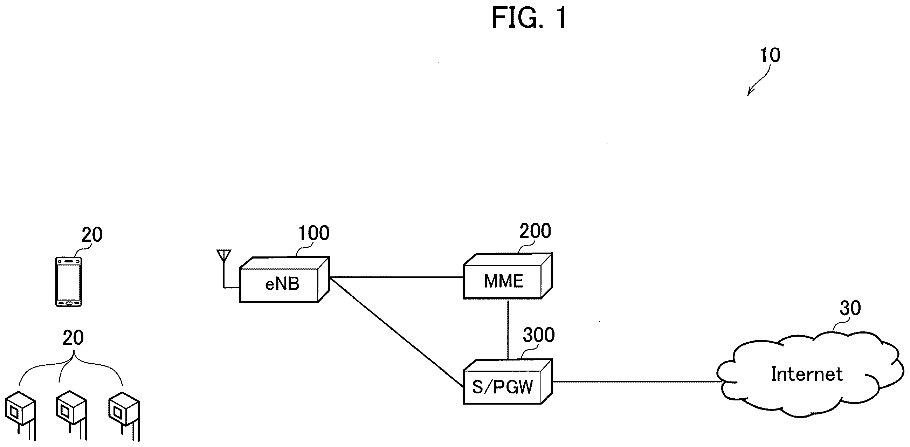

FIG. 1 is an overall structural diagram of a radio communication system 10 according to the present embodiment. The radio communication system 10 conforms to the specifications (for example, Long Term Evolution (LTE)) defined by 3rd Generation Partnership Project (3GPP).

Particularly, in the present embodiment, the radio communication system 10 corresponds to Cellular Internet of Things (CIoT) optimized for connecting various types of user devices (user equipment) 20 (hereinafter, "UE 20") In the CIoT, it is assumed that a huge number of UEs 20, such as Machine Type Communications (MTC) terminals, are connected to a radio network constituted by the radio communication system 10. The UE 20, such as the MTC terminal, is characterized in that it transmits a small amount of data.

As shown in FIG. 1, the radio communication system 10 includes a plurality of the UEs 20, a radio base station 100 (hereinafter, "eNB 100"), a mobility management entity 200 (hereinafter, "MME 200"), and a Serving-Gateway/Packet Data Network-Gateway 300 (hereinafter, "S/PGW 300").

The UE 20 performs radio communication with the eNB 100 in accordance with a radio access technology (RAT) such as LTE. Specifically, the UE 20 performs radio communication with the eNB 100 via an access layer (Access Stratum (AS)) that is a functional layer between the UE 20 and the eNB 100.

The eNB 100 also performs radio communication with the UE 20 according to the RAT, that is, performs radio communication with the UE 20 via the AS. As mentioned above, the UE 20 corresponds to various types of terminals including the MTC terminal, a smartphone, and the like, and a number of the UEs 20 perform communication by connecting to the radio communication system 10.

The MME 200 manages mobility of the UE 20. Specifically, the MME 200 accommodates the eNB 100 via S1-MME interface, performs mobility management and authentication (security control) of the UE 20, setting processing of a forwarding route of user data, and the like.

The S/PGW 300 (SGW) is a serving packet gateway that routes packet data (user data) to be transmitted or received by the UE 20. The S/PGW 300 (SGW) transmits / receives the user data to / from the eNB 100 and also sets a communication route for each external packet network (PDN) to be connected.

The S/PGW 300 (PGW) is connected to Internet 30 and performs assignment of IP address and the like. The S/PGW 300 (PGW) acts as a switching point for user data forwarding when the UE 20 moves from the radio communication system 10 conforming to 3GPP specification to a non-3GPP radio communication system (wireless LAN or the like).

### (2) Functional Block Configuration of Radio Communication System

A functional block configuration of the radio communication system 10 is explained below. Specifically, a functional block configuration of each of the eNB 100, the MME 200, the S/PGW 300, and the UE 20 will be explained.

### (2.1) eNB 100

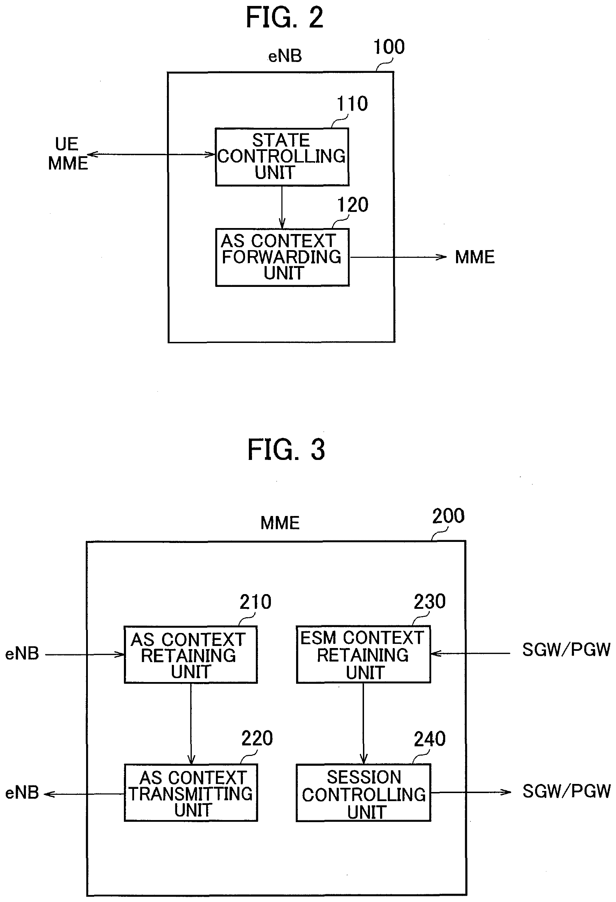

FIG. 2 is a functional block diagram of the eNB 100. As shown in FIG. 2, the eNB 100 includes a state controlling unit 110 and an AS context forwarding unit 120.

The state controlling unit 110 controls a state of the UE 20. Specifically, the state controlling unit 110 controls the UE 20 so as to be either in an idle state or in a connected state. In the idle state, the UE 20 does not have Data Radio Bearer (DRB, data radio bearer), and the UE 20 is not connected to the radio network by the data radio bearer. The connected state is a state in which the UE 20 has the data radio bearer via the eNB 100, and the UE 20 is connected to the radio network by the data radio bearer. The radio network means a radio access network and a core network constituted by the radio communication system 10.

Specifically, because the idle state is a state in which the UE 20 does not have the data radio bearer, the setting in the AS is released in the UE 20. On the other hand, because the connected state is a state in which the UE 20 has the data radio bearer, it is a state in which the connection setting of the AS has been completed, that is, the UE 20 also has AS Context.

The state controlling unit 110 can receive the AS Context of the UE 20 transmitted by the MME 200. The state controlling unit 110 causes the UE 20 to return to the connected state, specifically to the connected state in which the UE 20 can communicate user data, by using the received AS Context.

The AS Context is a context of the AS between the UE 20 and the eNB 100. The AS Context is a key, an algorithm, or a sequence number in the AS part used for establishing security for data communication.

The AS context forwarding unit 120 forwards the AS Context of the UE 20 to the MME 200. Specifically, when the UE 20 has transitioned from the connected state to the idle state, the AS context forwarding unit 120 forwards the AS Context of the UE 20 to the MME 200.

More specifically, the AS context forwarding unit 120 forwards the AS Context to the MME 200 after adding the AS Context of the UE 20 in a message (UE Context Release Complete) that indicates that releasement of a context (UE Context) relating to the UE 20 has been completed.

### (2.2) MME 200

FIG. 3 is a functional block diagram of the MME 200. As shown in FIG. 3, the MME 200 includes an AS context retaining unit 210, an AS context transmitting unit 220, an ESM context retaining unit 230, and a session controlling unit 240.

The AS context retaining unit 210 retains the AS Context of the UE 20 forwarded thereto by the eNB 100. Specifically, the AS context retaining unit 210 retains the forwarded AS Context of the UE 20 in association with an identifier (for example, S-TMSI (Temporary Mobile Subscriber Identity) of the UE 20.

The AS context retaining unit 210 can delete the AS Context retained thereby after the AS context transmitting unit 220 has transmitted the AS Context to the eNB 100.

In response to an AS Context acquisition request from the eNB 100, the AS context transmitting unit 220 transmits the AS Context retained in the AS context retaining unit 210 to the eNB 100.

Specifically, the AS context transmitting unit 220 transmits the AS Context of the UE 20 to the eNB 100 after adding the AS Context in a message (Initial Context Setup Request) that requests setting of the UE Context of the UE 20.

The ESM context retaining unit 230 retains a management context of a session for the UE 20. Specifically, the ESM context retaining unit 230 retains ESM Context contained in a delete session response (Delete Session Response) transmitted from the S/PGW 300.

The ESM Context is a context of EPS Session Management (ESM). The ESM Context contains an EPS bearer, information on session establishment set in a core network, more specifically, between the UE 20 and the S/PGW 300 (PGW), and the like.

When the UE 20 returns from the idle state to the connected state, the ESM context retaining unit 230 can delete the retained ESM Context.

The session controlling unit 240 controls a session for the UE 20. Specifically, the session controlling unit 240 controls the session for the UE 20 based on the ESM.

Particularly, in response to start of a process of the UE 20 returning from the idle state to the connected state, the session controlling unit 240 transmits to the S/PGW 300 a create session request (Create Session Request) containing the ESM Context of the UE 20 retained by the ESM context retaining unit 230.

Specifically, the session controlling unit 240 can transmit to the S/PGW 300 the ESM Context of the UE 20 and the Create Session Request containing a device identifier that is an identifier of the UE 20. As the device identifier (terminal identifier), for example, Globally Unique Temporary ID (GUTI) can be used.

### (2.3) S/PGW 300

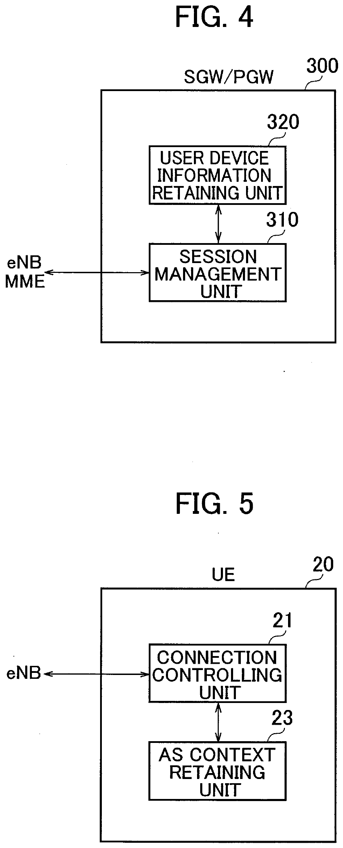

FIG. 4 is a functional block diagram of the S/PGW 300. As shown in FIG. 4, the S/PGW 300 includes a session management unit 310 and a user device information retaining unit 320.

The session management unit 310 manages the session for the UE 20. Specifically, upon receiving from the MME 200 a delete session request (Delete Session Request) that requests deletion of the session for the UE 20, the session management unit 310 transmits to the MME 200 a delete session response (Delete Session Response) that contains the ESM Context of the session.

Moreover, the session management unit 310 resets the session for the UE 20 corresponding to the ESM Context based on the ESM Context contained in the create session request (Create Session Request) received from the MME 200.

Upon receiving the Delete Session Request that contains the device identifier (GUTI) of the UE 20, the session management unit 310 can reset the session based on the device identifier retained by the user device information retaining unit 320 and an IP address assigned to the UE 20.

The user device information retaining unit 320 retains information relating to the UE 20. Specifically, the user device information retaining unit 320 retains in association with each other the device identifier (GUTI) of the UE 20 and the IP address assigned to the UE 20.

The user device information retaining unit 320 presents the GUTI and the IP address of the UE 20 to the session management unit 310 in response to a request to that effect from the session management unit 310.

When the UE 20 has returned from the idle state to the connected state, the user device information retaining unit 320 can delete the retained GUTI and the IP address.

### (2.4) UE 20

FIG. 5 is a functional block diagram of the UE 20. As shown in FIG. 5, the UE 20 includes a connection controlling unit 21 and an AS context retaining unit 23.

The connection controlling unit 21 controls a connection between the UE 20 and the radio network. Specifically, the connection controlling unit 21 controls the UE 20 so as to be either in the connected state or in the idle state.

More specifically, when causing the UE 20 to return from the idle state to the connected state, the connection controlling unit 21 causes the UE 20 to return to the connected state by using the AS Context of the UE 20 retained in the AS context retaining unit 23.

The AS context retaining unit 23 retains the AS Context of the UE 20. Specifically, the AS context retaining unit 23 retains the AS Context of the UE 20 when the UE 20 has been transitioned by the connection controlling unit 21 from the connected state to the idle state.

When the UE 20 has returned from the idle state to the connected state, the AS context retaining unit 23 can delete the retained AS Context.

### (3) Operation of Radio Communication System

An operation of the radio communication system 10 will be explained below. Specifically, an operation relating to the processing of the AS Context and the ESM Context when the UE 20 has transitioned from the connected state to the idle state and thereafter has returned to the connected state will be explained.

### (3.1) Operation Example 1

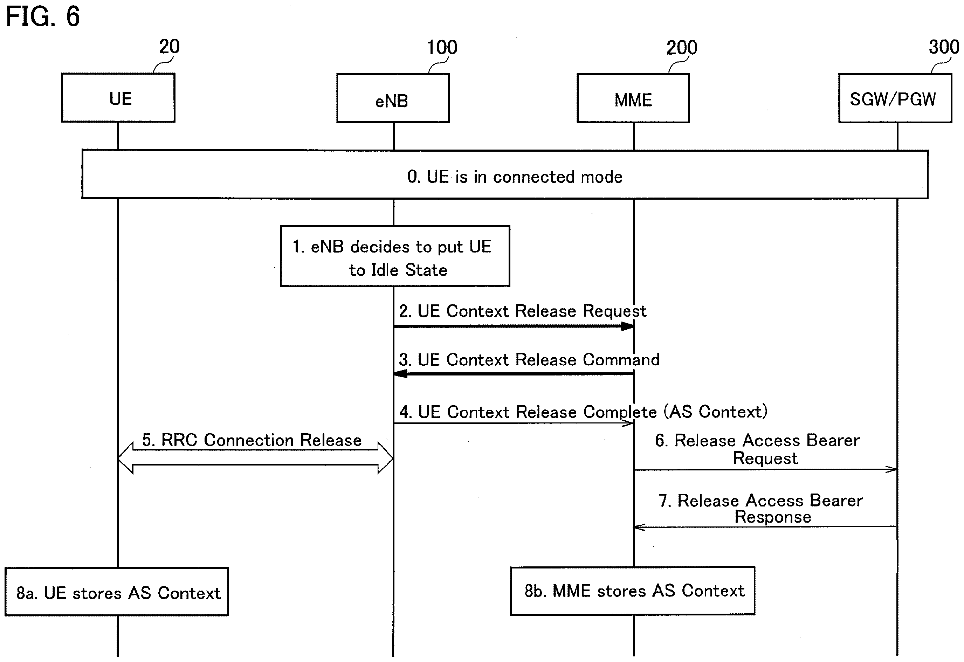

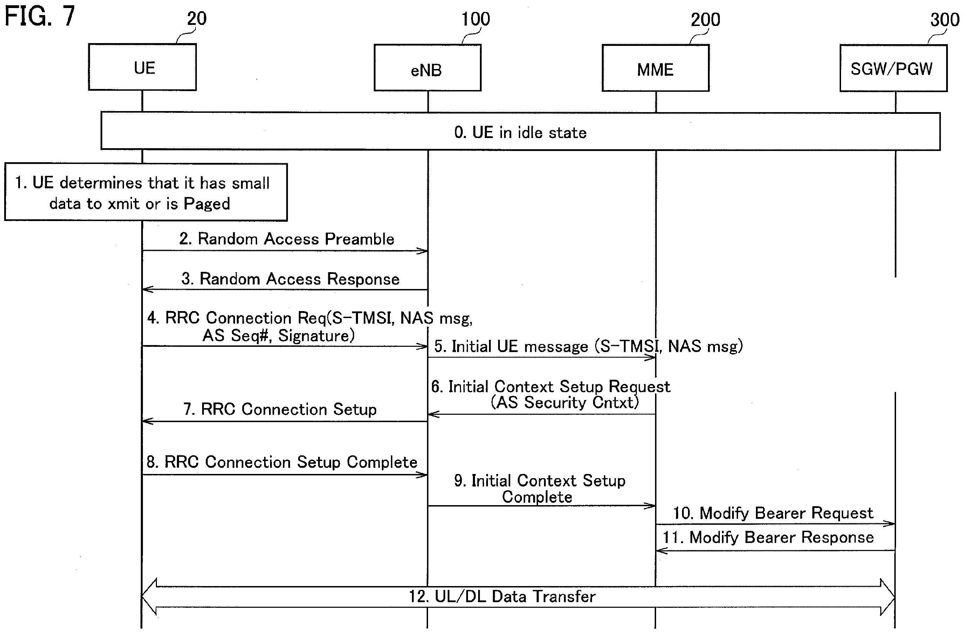

FIG. 6 shows a processing sequence of the AS Context (a radio access bearer releasing procedure of an S1 interface) when the UE 20 has transitioned from the connected state to the idle state. FIG. 7 shows a processing sequence (a service request procedure) of the AS Context when the UE 20 returns from the idle state to the connected state. In these processing sequences, it is assumed that the UE 20 is the MTC terminal or the like that transmits a small amount of data.

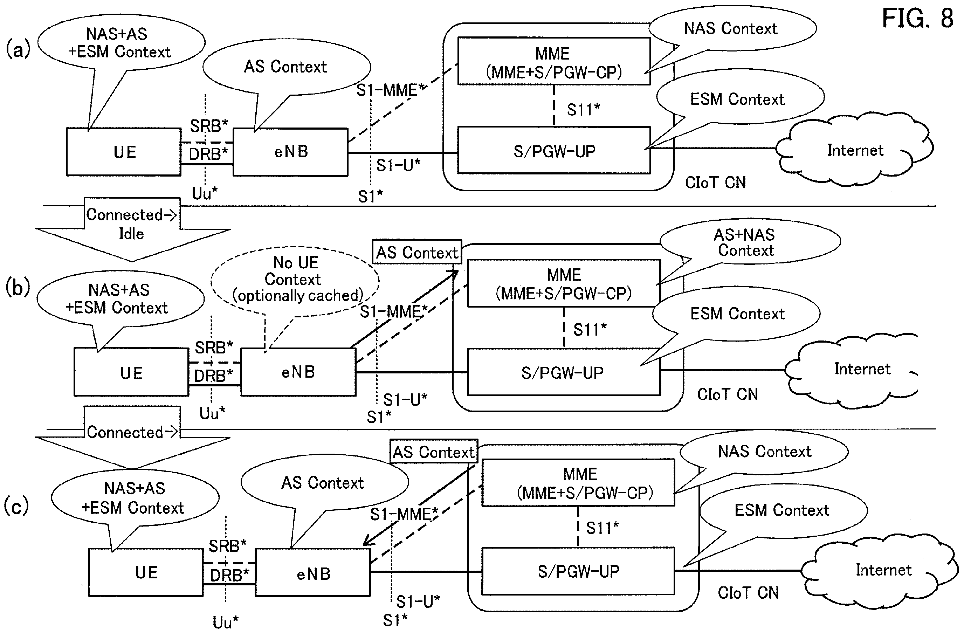

FIG. 8(a) to FIG. 8(c) are explanatory views of a retained state of the AS Context when the UE 20 has transitioned from the connected state to the idle state and thereafter has returned to the connected state.

### (3.1.1) Transition from Connected State to Idle State

As shown in FIG. 6, in the connected state in which the UE 20 has been connected to the radio network, the eNB 100 decides to put the UE 20 to the idle state (Step 1). As a reason for deciding to put the UE 20 to the idle state can be that user data transmitted and received by the UE 20 has not been generated for a certain period of time, or this decision can be made based on a request to that effect from the UE 20 or the core network.

The eNB 100 transmits / receives commands relating to releasement of the UE Context to / from the MME 200 (Steps 2 to 4). Such processing has been specified in 3GPP TS 23.401 Section 5.3.5.

The UE Context Release Complete that is transmitted by the eNB 100 to the MME 200 contains the AS Context of the UE 20. As mentioned above, the AS Context is a key, an algorithm, a sequence number, and the like used for establishing the security in the AS.

Upon completion of the process relating to the releasement of the UE Context with the MME 200, the eNB 100 performs an RRC Connection releasing procedure with the UE 20 (Step 5).

The MME 200 performs the radio access bearer releasing procedure relating to the UE 20 (Steps 6 and 7). Such processing has also been specified in the 3GPP TS 23.401 Section 5.3.5.

By such processing, the UE 20 transitions from the connected state to the idle state. Upon completion of the RRC Connection releasing procedure, the UE 20 retains and stores therein the AS Context at the time of completion (Step 8a).

Similarly, when the radio access bearer releasing procedure is completed, the MME 200 also retains and stores therein the AS Context of the UE 20 at the time of completion (Step 8b).

As shown in FIG. 8(a), when the UE 20 is in the connected state, NAS Context, the AS Context, and the ESM Context of the UE 20 are retained in the UE 20. In the eNB 100, the AS Context of the UE 20 is retained. Furthermore, the NAS Context of the UE 20 is retained in the MME 200, and the ESM Context of the UE 20 is retained in the S/PGW 300.

When the UE 20 has transitioned from the connected state to the idle state, as shown in FIG. 8(b), the AS Context that has been retained in the eNB 100 is forwarded to the MME 200. The MME 200 retains, that is, saves and stores therein the forwarded AS Context.

### (3.1.2) Return from Idle State to Connected State

As shown in FIG. 7, in the idle state in which the UE 20 is not connected to the radio network, the UE 20 determines to transmit a small amount of data or determines to respond to paging (calling) for the UE 20 (Step 1). Specifically, NAS of the UE 20 requests setting of AS connection to the AS.

The UE 20 performs a random access procedure with the eNB 100 (Steps 2 and 3). The UE 20 transmits RRC Connection Request to the eNB 100 (Step 4).

At Step 4, the UE 20 performs a Service Request procedure by transmitting a NAS Service request message to the eNB 100. Such a message contains the S-TMSI of the UE 20, a sequence number (Seq #) of the AS, a security signature, and the like. Moreover, the NAS message is signed with information contained in the AS Context retained in the UE 20.

The eNB 100 selects a corresponding MME based on the S-TMSI received from the UE 20. It is assumed here that the MME 200 has been selected. The eNB 100 transmits an Initial UE message (NAS message) to the MME 200 (Step 5). Such processing has been specified in 3GPP TS 23.401 Section 5.3.4.1.

The MME 200 checks the signature information contained in the Initial UE message to determine the validity of the Initial UE message. If the Initial UE message is valid, the MME 200 transmits to the eNB 100 the Initial Context Setup Request containing the AS Context of the UE 20 (Step 6).

Basically, the AS Context transmitted at Step 6 is the same as the AS Context sent by the eNB 100 to the MME 200. However, the MME 200 can update the contents of the AS Context as necessary.

For example, the MME 200 can update the contents of the AS Context in order to prevent the security from being threatened when the context relating to the security of the AS has not been changed for a certain period of time or more. Alternatively, when the eNB has been changed, if the MME 200 determines to provide a new key to the eNB, the MME 200 can update the contents of the AS Context.

Based on the received AS Context, the eNB 100 checks the validity of the RRC Connection Request received from the UE 20. If the RRC Connection Request is valid, the eNB 100 sets RRC Connection with the UE 20 (Steps 7 and 8).

As a result, Signaling Radio Bearer (SRB), Data Radio Bearer (DRB), and the AS Context for the UE 20 are set. Moreover, the NAS of the UE 20 also transitions to an EMM connected state (EMM Connected).

Contents of Steps 9 to 12 are similar to the contents specified in the 3GPP TS 23.401 Section 5.3.4.1. By performing such process, the bearer (communication path) for the UE 20 is reset, and data forwarding in an uplink direction or in a downlink direction is started.

As shown in FIG. 8(c), when the UE 20 has returned from the idle state to the connected state, the AS Context retained in the MME 200 is returned to the eNB 100. Note that the MME 200 can delete the AS Context after returning the AS Context.

### (3.2) Operation Example 2

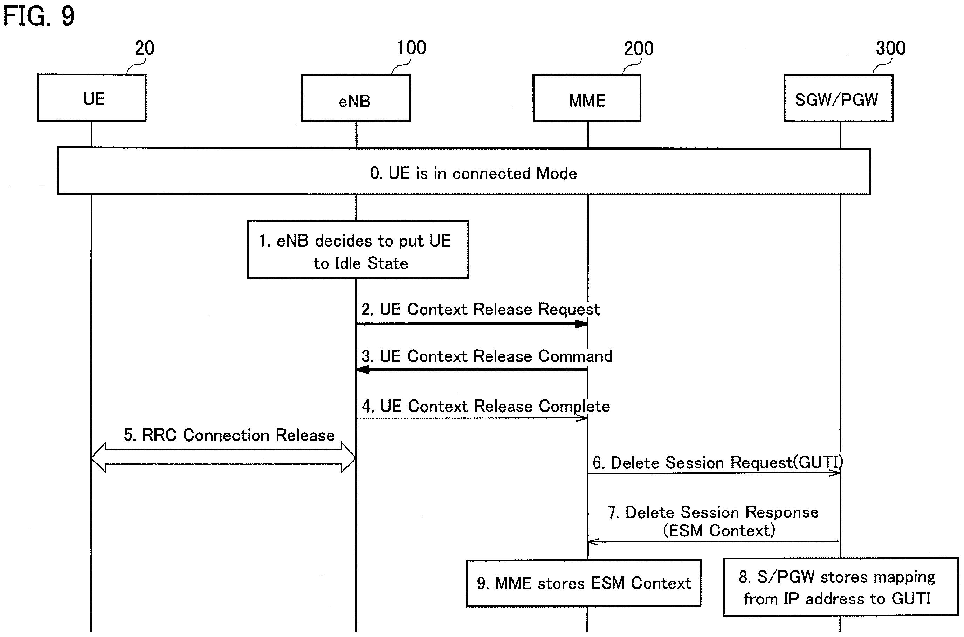

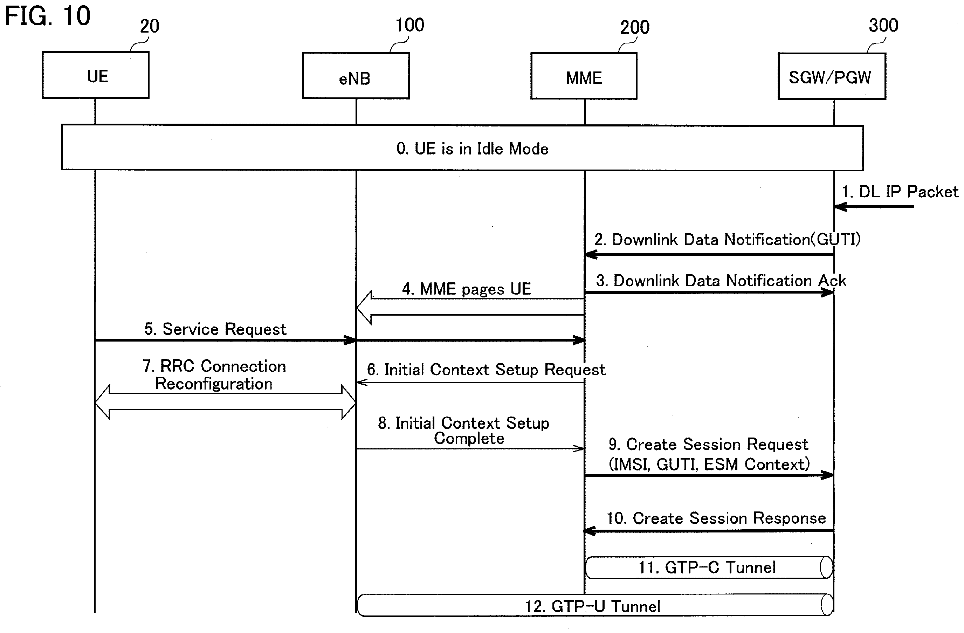

FIG. 9 shows a processing sequence of the ESM Context (the radio bearer releasing procedure of the S1 interface) when the UE 20 has transitioned from the connected state to the idle state. FIG. 10 shows a processing sequence (a service request procedure) of the ESM Context when the UE 20 returns from the idle state to the connected state. Even in these processing sequences, it is assumed that the UE 20 is the MTC terminal or the like that transmits a small amount of data.

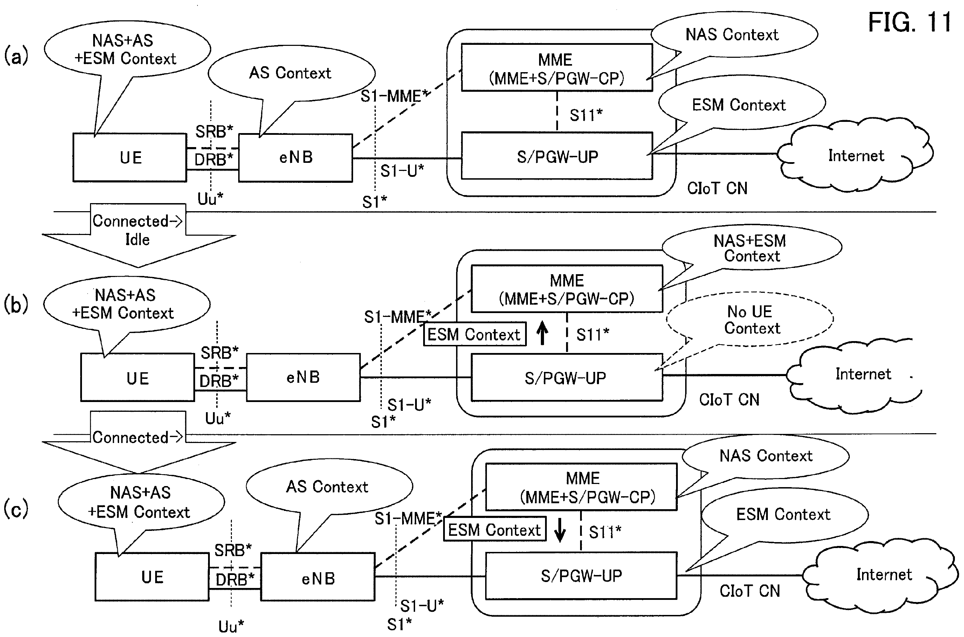

FIG. 11(a) to FIG. 11(c) are explanatory views of a retained state of the ESM Context when the UE 20 has transitioned from the connected state to the idle state and thereafter has returned to the connected state.

Hereinafter, portions that are different from Operation Example 1 will be mainly explained, and explanation of the similar portions will be appropriately omitted.

### (3.2.1) Transition from Connected State to Idle state

As shown in FIG. 9, the processes at Steps 1 to 5 are the same as those specified in the 3GPP TS 23.401 Section 5.3.5.

The MME 200 transmits to the S/PGW 300 the Delete Session Request containing the Globally Unique Temporary ID (GUTI) of the UE 20 (Step 6). Upon receiving the Delete Session Request, the S/PGW 300 deletes a GTP-C (GPRS Tunneling Protocol-Control Plane) session and a GTP-U (GPRS Tunneling Protocol-User Plane) session for the UE 20, that is, those associated with the UE 20.

After deleting the GTP-C session and the GTP-U session, the S/PGW 300 transmits to the MME 200 the Delete Session Response containing the ESM Context of the UE 20 (Step 7) .

Also, the S/PGW 300 deletes the ESM Context. The S/PGW 300 retains only an association (mapping) between the GUTI and the IP address of the UE 20 (Step 8).

The MME 200 retains and stores therein the ESM Context contained in the received Delete Session Response (Step 9) .

FIG. 11(a) is the same as FIG. 8(a). That is, when the UE 20 is in the connected state, the NAS Context, the AS Context, and the ESM Context of the UE 20 are retained in the UE 20. Also, in the eNB 100, the AS Context of the UE 20 is retained. Furthermore, the NAS Context of the UE 20 is retained in the MME 200, and the ESM Context of the UE 20 is retained in the S/PGW 300.

When the UE 20 has transitioned from the connected state to the idle state, as shown in FIG. 11(b), the ESM Context that was retained in the S/PGW 300 is forwarded to the MME 200. The MME 200 retains, that is, saves and stores therein the forwarded ESM Context.

### (3.2.2) Return from Idle State to Connected State

As shown in FIG. 10, when the Service Request is under the initiative of the network, the procedure is started from Step 1. On the other hand, when the Service Request is under the initiative of the UE 20, the procedure is started from Step 5. A case in which the Service Request under the initiative of the network will be explained below.

The S/PGW 300 receives a downlink IP packet addressed to the UE 20 (Step 1). As mentioned above, after transmitting the Delete Session Response, the S/PGW 300 has already deleted the ESM Context of the UE 20, and retains only the association between the GUTI and the IP address of the UE 20. Therefore, the S/PGW 300 selects the MME to which Downlink Data Notification should be transmitted based on the GUTI. Here, it is assumed that the MME 200 has been selected.

The S/PGW 300 transmits the Downlink Data Notification containing the GUTI to the MME 200 (Step 2). A default GTP-C session set between the MME 200 and the S/PGW 300 can be used in transmitting the Downlink Data Notification.

The MME 200 transmits to the S/PGW 300 Downlink Data Notification Ack that is an acknowledgment for the Downlink Data Notification (Step 3). In addition, the MME 200 performs paging for the UE 20 based on the received Downlink Data Notification (Step 4).

Contents of Steps 5 to 8 are similar to the contents specified in the 3GPP TS 23.401 Section 5.3.4.1. Upon receiving Initial Context Setup Complete, the MME 200 transmits to the S/PGW 300 the Create Session Request that requests the setting of the session for the UE 20 (Step 9). The Create Session Request contains, along with the ESM Context, IMSI (International Mobile Subscriber Identity) and the GUTI of the UE 20. The GUTI is used by the S/PGW 300 to specify the user device that should update the UE Context.

The S/PGW 300 transmits to the MME 200 Create Session Response that is a response to the Create Session Request (Step 10). The S/PGW 300 resets the GTP-C session (tunnel) for the UE 20 with the MME 200 based on the ESM Context and the association between the GUTI and the IP address assigned to the UE 20, and also resets the GTP-U session (tunnel) for the UE 20 with the eNB 100 (Steps 11 and 12).

Furthermore, as shown in FIG. 11(c), when the UE 20 has returned from the idle state to the connected state, the ESM Context retained in the MME 200 is returned to the S/PGW 300. The MME 200 can delete the ESM Context after returning the ESM Context to the S/PGW 300.

### (3.3) Operation Example 3

This Operation Example is a combination of Operation Example 1 and Operation Example 2 explained above. That is, the processing sequence of the AS Context shown in FIGS. 6 and 7 and the processing sequence of the ESM Context shown in FIGS. 9 and 10 are performed in parallel.

That is, in Operation Example 3, when the UE 20 transitions from the connected state to the idle state, the AS Context and the ESM Context of the UE 20 are retained by the MME 200. Moreover, in Operation Example 3, when the UE 20 returns from the idle state to the connected state, the AS Context retained by the MME 200 is returned to the eNB 100, and the ESM Context retained by the MME 200 is returned to the S/PGW 300.

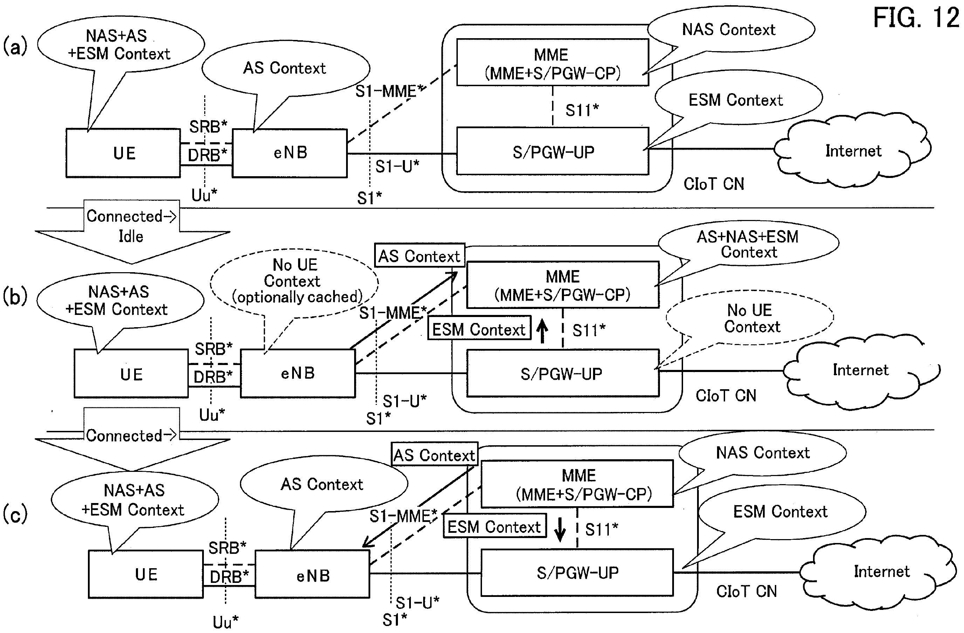

FIG. 12(a) to FIG. 12(c) are explanatory views of a retained state of the AS Context and the ESM Context when the UE 20 has transitioned from the connected state to the idle state and thereafter has returned to the connected state.

FIG. 12 (a) is the same as FIG. 8 (a) and FIG. 11(a) . That is, when the UE 20 is in the connected state, the NAS Context, the AS Context, and the ESM Context of the UE 20 are retained in the UE 20. Also, in the eNB 100, the AS Context of the UE 20 is retained. Furthermore, the NAS Context of the UE 20 is retained in the MME 200, and the ESM Context of the UE 20 is retained in the S/PGW 300.

When the UE 20 has transitioned from the connected state to the idle state, as shown in FIG. 12(b), the AS Context that was retained in the eNB 100 is forwarded to the MME 200. Moreover, the ESM Context retained in the S/PGW 300 is also forwarded to the MME 200. In this manner, when the UE 20 has transitioned to the idle state, the MME 200 centrally retains and manages the UE Context relating to the UE 20.

When the UE 20 returns from the idle state to the connected state, as shown in FIG. 12(c), the AS Context that was retained in the MME 200 is returned to the eNB 100, and the ESM Context that was retained in the MME 200 is returned to the S/PGW 300.

### (4) Advantages and Effects

According to the above embodiment, the following advantageous effects can be achieved. Specifically, according to Operation Example 1, when the UE 20 has transitioned from the connected state to the idle state, the AS Context of the UE 20 is forwarded from the eNB 100 to the MME 200. When the UE 20 has returned from the idle state to the connected state, the AS Context is returned from the MME 200 to the eNB 100.

When the UE 20 has returned to the connected state, because it is not necessary to newly perform setting (security and the like) relating to the AS between the eNB 100 and the MME 200, the Signaling Radio Bearer (SRB), the Data Radio Bearer (DRB), and the AS Context for the UE 20 can be reset quickly.

Furthermore, since the AS Context is retained in the MME 200, even when the eNB to be connected when the UE 20 returns to the connected state is different from the eNB when the UE was transitioned to the idle state, the AS Context can be presented immediately to the eNB to be connected when returning. As a result, even when a huge number of the UEs are connected to the radio network like in the CIoT, the idle UE can be quickly and reliably returned to the connected state.

Furthermore, according to Operation Example 1, it is possible to drastically reduce the storage capacity required in the eNB 100 for the AS Context. Moreover, it is preferable from the viewpoint of improvement in the security not to store information relating to the security such as the AS Context in the eNB 100. In addition, the MME 200 having equipment scale larger than the eNB 100 is, as it is highly reliable, generally preferable than the eNB 100 as a device for retaining the AS Context.

In Operation Example 1, the AS Context is added in the UE Context Release Complete and the Initial Context Setup Request. Therefore, it is possible to quickly and reliably return the idle UE to the connected state while using the existing procedure specified in the 3GPP.

Next, according to Operation Example 2, when the UE 20 has transitioned from the connected state to the idle state, the ESM Context of the UE 20 is forwarded from the S/PGW 300 to the MME 200. When the UE 20 has returned from the idle state to the connected state, the ESM Context is returned from the MME 200 to the S/PGW 300.

Therefore, when the UE 20 has returned to the connected state, because it is not necessary to perform the setting relating to the AS between the MME 200 and the S/PGW 300, the session (GTP-C, GTP-U) for the UE 20 can be reset quickly.

According to Operation Example 2, the storage capacity required in the S/PGW 300 for the ESM Context can be greatly reduced. Therefore, the equipment scale of the S/PGW 300 can be suppressed. Because the main function of the S/PGW 300 is the routing of the packet data, and considering the flexibility in adoption to the future radio network (for example, 5G) architecture, it is preferable that the S/PGW 300 excludes C-plane processing such as the session management and the like and specializes in U-plane processing; however, according to Operation Example 2, such function separation can be realized.

Furthermore, according to Operation Example 3, the MME 200 centrally retains and manages the UE Context (AS Context and ESM Context) relating to the UE 20. Therefore, it is possible to reduce the necessity to manage in a distributed manner the UE Context in a plurality of devices, thereby contributing to an improvement in the flexibility of adapting to the future radio network architecture.

Furthermore, according to Operation Example 1 to Operation Example 3, because the existing S1 interface is used as is and it is possible to cause the MME 200 to centrally perform the C-plane processing and cause the S/PGW 300 to centrally perform the U-plane processing, it is expected that those operation examples have a high compatibility with the future (5G) network concept that will develop in the future.

### (5) Other Embodiments

Although the contents of the present invention have been explained above by using the embodiments, it is obvious for a person skilled in the art that the present invention is not limited to those embodiments and that various modifications and improvements thereof are possible.

For example, in Operation Example 1, the AS Context of the UE 20 is contained in the UE Context Release Complete and the Initial Context Setup Request; however, such operation is not necessary. That is, the AS Context can be added in a message specified in the 3GPP other than the UE Context Release Complete and the Initial Context Setup Request, or a new message for forwarding the AS Context can be defined.

In Operation Example 2, the S/PGW 300 retains the association (mapping) between the GUTI and the IP address of the UE 20; however, such operation is not necessary. For example, the S/PGW 300 can be configured so that information required for realizing such association can be obtained from a different device.

In the above embodiment, the radio communication system 10 has been explained as conforming to the specifications defined by the 3rd Generation Partnership Project (3 GPP) (for example, LTE) ; however, the radio communication system 10 needs not necessarily be limited to the one conforming to such specifications.

Furthermore, the block diagrams used for explaining the embodiments showed functional block diagrams. Those functional blocks (structural components) can be realized by a desired combination of hardware and / or software. Means for realizing each functional block is not particularly limited. That is, each functional block may be realized by one device combined physically and / or logically. Alternatively, two or more devices separated physically and / or logically may be directly and / or indirectly connected (for example, wired and / or wireless) to each other, and each functional block may be realized by these plural devices.

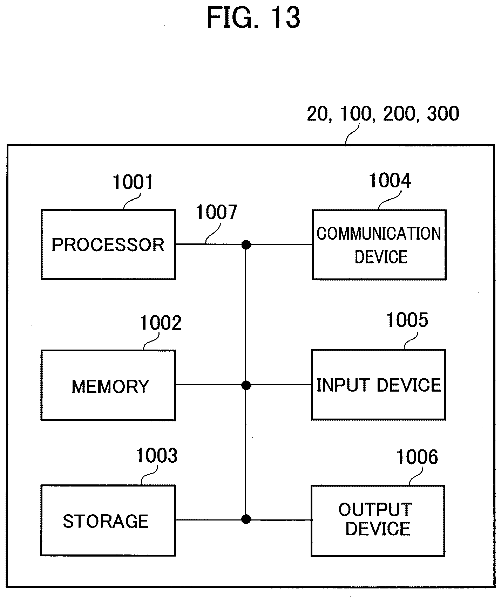

Furthermore, the UE 20, the eNB 100, the MME 200, and the S/PGW 300 explained above can function as a computer that performs the processing according to the radio communication method of the present invention. FIG. 13 is a diagram showing an example of a hardware configuration of the UE 20, the eNB 100, the MME 200, and the S/PGW 30. As shown in FIG. 13, the UE 20, the eNB 100, the MME 200, and the S/PGW 30 can be configured as a computer device including a processor 1001, a memory 1002, a storage 1003, a communication device 1004, an input device 1005, an output device 1006, and a bus 1007.

The processor 1001, for example, operates an operating system to control the entire computer. The processor 1001 can be configured with a central processing unit (CPU) including an interface with a peripheral device, a control device, a computing device, a register, and the like.

The memory 1002 is a computer readable recording medium and is configured, for example, with at least one of ROM (Read Only Memory), EPROM (Erasable Programmable ROM), EEPROM (Electrically Erasable Programmable ROM), RAM (Random Access Memory), and the like. The memory 1002 can be called register, cache, main memory (main memory), and the like. The memory 1002 can store therein a computer program (computer program codes), software modules, and the like that can execute the method according to the above embodiments.

The storage 1003 is a computer readable recording medium. Examples of the storage 1003 include an optical disk such as CD-ROM (Compact Disc ROM), a hard disk drive, a flexible disk, a magneto-optical disk (for example, a compact disk, a digital versatile disk, a Blu-ray (Registered Trademark) disk), a smart card, a flash memory (for example, a card, a stick, a key drive), a floppy (Registered Trademark) disk, a magnetic strip, and the like. The storage 1003 can be called an auxiliary storage device. The recording medium can be, for example, a database including the memory 1002 and / or the storage 1003, a server, or other appropriate medium.

The communication device 1004 is hardware (a transmission / reception device) capable of performing communication between computers via a wired and / or wireless network. The communication device 1004 is also called, for example, a network device, a network controller, a network card, a communication module, and the like.

The input device 1005 is an input device (for example, a keyboard, a mouse, a microphone, a switch, a button, a sensor, and the like) that accepts input from the outside. The output device 1006 is an output device (for example, a display, a speaker, an LED lamp, and the like) that outputs data to the outside. Note that the input device 1005 and the output device 1006 may be integrated (for example, a touch screen).

In addition, the respective devices, such as the processor 1001 and the memory 1002, are connected to each other with the bus 1007 for communicating information there among. The bus 1007 can be constituted by a single bus or can be constituted by separate buses between the devices.

In addition, the manner of notification of information is not limited to the one explained in the embodiments, and the notification may be performed in other manner. For example, the notification of information can be performed by physical layer signaling (for example, DCI (Downlink Control Information), UCI (Uplink Control Information)), upper layer signaling (for example, RRC signaling, MAC (Medium Access Control) signaling, MIB (Master Information Block), SIB (System Information Block)), other signals, or a combination thereof. In addition, the RRC signaling can be called an RRC message, and the RRC signaling can be, for example, an RRC Connection Setup message, an RRC Connection Reconfiguration message, and the like.

Furthermore, the input / output information can be stored in a specific location (for example, a memory) or can be managed in a management table. The information to be input / output can be overwritten, updated, or added. The information can be deleted after outputting. The inputted information can be transmitted to another device.

The order of the sequences, flowcharts, and the like in the embodiments can be rearranged unless there is a contradiction.

Moreover, the terms used in this specification and / or the terms necessary for understanding the present specification can be replaced with terms having the same or similar meanings. For example, a channel and / or a symbol can be replaced with a signal (signal). Also, the signal can be replaced with a message. Moreover, the terms "system" and "network" can be used interchangeably.

Furthermore, the used parameter and the like can be represented by an absolute value, can be expressed as a relative value from a predetermined value, or can be represented by corresponding other information. For example, the radio resource can be indicated by an index.

The eNB 100 (base station) can accommodate one or more (for example, three) cells (also called sectors). In a configuration in which the base station accommodates a plurality of cells, the entire coverage area of the base station can be divided into a plurality of smaller areas. In each such a smaller area, communication service can be provided by a base station subsystem (for example, a small base station for indoor use RRH: Remote Radio Head).

The term "cell" or "sector" refers to a part or all of the coverage area of a base station and / or a base station subsystem that performs communication service in this coverage. In addition, the terms "base station" "eNB", "cell", and "sector" can be used interchangeably. The base station can also be referred to as a fixed station, Node B, eNode B (eNB), an access point, a femtocell, a small cell, and the like.

The UE 20 is called by the persons skilled in the art as a subscriber station, a mobile unit, a subscriber unit, a radio unit, a remote unit, a mobile device, a radio device, a radio communication device, a remote device, a mobile subscriber station, an access terminal, a mobile terminal, a radio terminal, a remote terminal, a handset, a user agent, a mobile client, a client, or with some other suitable term.

As used herein, the phrase "based on" does not mean "based only on" unless explicitly stated otherwise. In other words, the phrase "based on" means both "based only on" and "based at least on".

Furthermore, the terms "including", "comprising", and variants thereof are intended to be inclusive in a manner similar to "having". Furthermore, the term "or" used in the specification or claims is intended not to be an exclusive disjunction.

The present invention can be expressed as below. One aspect of the present invention relates to a radio communication system (radio communication system 10) including a radio base station (eNB 100) that performs radio communication with a user device (UE 20) via an access layer (AS) and a mobility management entity (MME 200) that manages mobility of the user device, the radio base station includes a state controlling unit (state controlling unit 110) that controls the user device so as to be in one of a connected state and an idle state; and a context forwarding unit (AS context forwarding unit 120) that, when the user device transitions from the connected state to the idle state, forwards to the mobility management entity AS context that is a context of the access layer between the user device and the radio base station, and the mobility management entity includes a context retaining unit (AS context retaining unit 210) that retains the AS context forwarded from the radio base station; and a context transmitting unit (AS context transmitting unit 220) that transmits to the radio base station the AS context retained in the context retaining unit in response to an acquisition request of the AS context from the radio base station, wherein the state controlling unit returns the user device to the connected state by using the AS context transmitted from the mobility management entity.

In the above aspect of the present invention, the context forwarding unit can forward the AS context to the mobility management entity by adding the AS context in a message (UE Context Release Complete) that indicates that releasement of the context relating to the user device has been completed.

In the above aspect of the present invention, the context transmitting unit can transmit the AS context to the radio base station by adding the AS context in a message (Initial Context Setup Request) that requests setting of the context relating to the user device.

One aspect of the present invention relates to a radio base station that performs radio communication with a user device via an access layer, the radio base station includes a state controlling unit that controls the user device so as to be in one of a connected state and an idle state; and a context forwarding unit that, when the user device transitions from the connected state to the idle state, forwards AS context that is a context of the access layer between the user device and the radio base station to a mobility management entity that manages mobility of the user device, and the state controlling unit returns the user device to the connected state by using the AS context transmitted from the mobility management entity.

One aspect of the present invention relates to a mobility management entity that manages mobility of a user device that performs radio communication with a radio base station via an access layer, the mobility management entity includes a context retaining unit that retains AS context forwarded from the radio base station, the AS context being a context of the access layer between the user device and the radio base station; and a context transmitting unit that transmits to the radio base station the AS context retained in the context retaining unit in response to an acquisition request of the AS context from the radio base station.

One aspect of the present invention relates to a user device (UE 20) that performs radio communication with a radio base station via an access layer, the user device includes a connection controlling unit (connection controlling unit 21) that controls the user device so as to be in one of a connected state and an idle state; and a context retaining unit (AS context retaining unit 23) that, when the user device is transitioned from the connected state to the idle state by the connection controlling unit, retains AS context that is a context of the access layer between the user device and the radio base station.

In the above aspect of the present invention, the connection controlling unit, when causing the user device to return to the connected state from the idle state, returns the user device to the connected state by using the AS context retained in the context retaining unit.

One aspect of the present invention relates to a communication control method that uses a radio base station that performs radio communication with a user device via an access layer and a mobility management entity that manages mobility of the user device, the communication control method includes forwarding, when the user device has transitioned from a connected state to an idle state, in which the radio base station forwards to the mobility management entity AS context that is a context of the access layer between the user device and the radio base station; transmitting in which the mobility management entity transmits the AS context to the radio base station in response to an acquisition request of the AS context from the radio base station; and causing the radio base station to return the user device to the connected state by using the AS context transmitted from the mobility management entity.

One aspect of the present invention relates to a radio communication system (radio communication system 10) including a gateway device (S/PGW 300) that routes packet data to be transmitted or received by a user device (UE 20) and a mobility management entity (MME 200) that manages mobility of the user device, the gateway device includes a session management unit (session management unit 310) that transmits a delete session response (Delete Session Response) containing a management context (ESM Context) of a session to the mobility management entity upon receiving from the mobility management entity a delete session request (Delete Session Request) that requests deletion of the session for the user device, and the mobility management entity includes a context retaining unit (ESM context retaining unit 230) that retains the management context contained in the delete session response; and a session controlling unit (session controlling unit 240) that transmits to the gateway device a create session request (Create Session Request) containing the management context retained by the context retaining unit in response to a start of a process of returning the user device from an idle state to a connected state, wherein the session management unit resets the session based on the management context contained in the create session request received from the mobility management entity.

In the above aspect of the present invention, the gateway device can include a user device information retaining unit (user device information retaining unit 320) that retains in association with each other a device identifier as an identifier of the user device and an IP address assigned to the user device, the session management unit can receive the delete session request containing the device identifier, the session controlling unit can transmit to the gateway device the create session request containing the management context and the device identifier, and the session management unit can reset the session based on the device identifier and the IP address retained by the user device information retaining unit.

One aspect of the present invention relates to a gateway device that routes packet data to be transmitted or received by a user device, the gateway device includes a session management unit that transmits to a mobility management entity a delete session response containing a management context of a session upon receiving a delete session request that requests deletion of the session for the user device from the mobility management entity that manages mobility of the user device.

In the above aspect of the present invention, the gateway device can include a user device information retaining unit that retains in association with each other a device identifier as an identifier of the user device and an IP address assigned to the user device, the session management unit can receive the delete session request containing the device identifier, and the session management unit can reset the session based on the device identifier and the IP address retained by the user device information retaining unit.

One aspect of the present invention relates to a mobility management entity that manages mobility of a user device. The mobility management entity includes a context retaining unit that can retain a management context of a session; and a session controlling unit that can transmit to a gateway device a create session request containing the management context retained by the context retaining unit in response to a start of a process for the user device to return from an idle state to a connected state, wherein the management context can be contained in a delete session response that is a response from the gateway device in response to a delete session request that requests deletion of the session for the user device.

In the above aspect of the present invention, the session controlling unit can transmit to the gateway device the create session request containing the management context and a device identifier that is an identifier of the user device.

One aspect of the present invention relates to a communication control method that uses a gateway device that routes packet data to be transmitted or received by a user device and a mobility management entity that manages mobility of the user device. The communication control method includes transmitting in which the gateway device transmits to the mobility management entity a delete session response containing a management context of a session upon receiving from the mobility management entity a delete session request that requests deletion of the session for the user device; transmitting in which the mobility management entity transmits to the gateway device a create session request containing the management context in response to a start of a process of returning the user device from an idle state to a connected state; and resetting in which the gateway device resets the session based on the management context contained in the create session request received from the mobility management entity.

In the above aspect of the present invention, the delete session request contains a device identifier that is an identifier of the user device, the create session request contains the management context and the device identifier, the communication control method further includes creating in which the gateway device creates an association between the device identifier and an IP address assigned to the user device, and at the resetting the session the gateway device can reset the session based on the device identifier and the IP address.

As described above, the details of the present invention have been disclosed by using the embodiment of the present invention. However, the description and drawings which constitute part of this disclosure should not be interpreted so as to limit the present invention. From this disclosure, various alternative embodiments, examples, and operation techniques will be easily apparent to a person skilled in the art.

The entire contents of Japanese Patent Application 2015-160502 (filed on August 17, 2015) are incorporated in the description of the present application by reference.

### INDUSTRIAL APPLICABILITY

In the radio communication system, the radio base station, the mobility management entity, the user device, and the communication control method, an idle user device can be quickly and reliably returned to a connected state in a configuration in which a huge number of user devices (UE) are connected to a radio network such as in the CIoT.

### EXPLANATION OF REFERENCE NUMERALS

- 10: Radio communication system
- 20: UE
- 21: Connection controlling unit
- 23: AS context retaining unit
- 30: Internet
- 100: eNB
- 110: State controlling unit
- 120: AS context forwarding unit
- 200: MME
- 210: AS context retaining unit
- 220: AS context transmitting unit
- 230: ESM context retaining unit
- 240: Session controlling unit
- 300: S/PGW
- 310: Session management unit
- 320: User device information retaining unit

## Claims

1. A radio communication system including a radio base station that performs radio communication with a user device via an access layer and a mobility management entity that manages mobility of the user device, wherein
the radio base station includes
a state controlling unit that controls the user device so as to be in one of a connected state and an idle state; and
a context forwarding unit that, when the user device transitions from the connected state to the idle state, forwards to the mobility management entity AS context that is a context of the access layer between the user device and the radio base station, and
the mobility management entity includes
a context retaining unit that retains the AS context forwarded from the radio base station; and
a context transmitting unit that transmits to the radio base station the AS context retained in the context retaining unit in response to an acquisition request of the AS context from the radio base station, and
the state controlling unit returns the user device to the connected state by using the AS context transmitted from the mobility management entity.

2. The radio communication system as claimed in claim 1, wherein the context forwarding unit forwards the AS context to the mobility management entity by adding the AS context in a message that indicates that releasement of the context relating to the user device has been completed.

3. The radio communication system as claimed in claim 1, wherein the context transmitting unit transmits the AS context to the radio base station by adding the AS context in a message that requests setting of the context relating to the user device.

4. A radio base station that performs radio communication with a user device via an access layer, comprising:
a state controlling unit that controls the user device so as to be in one of a connected state and an idle state; and
a context forwarding unit that, when the user device transitions from the connected state to the idle state, forwards AS context that is a context of the access layer between the user device and the radio base station to a mobility management entity that manages mobility of the user device, wherein
the state controlling unit returns the user device to the connected state by using the AS context transmitted from the mobility management entity.

5. A mobility management entity that manages mobility of a user device that performs radio communication with a radio base station via an access layer, comprising:
a context retaining unit that retains AS context forwarded from the radio base station, the AS context being a context of the access layer between the user device and the radio base station; and
a context transmitting unit that transmits to the radio base station the AS context retained in the context retaining unit in response to an acquisition request of the AS context from the radio base station.

6. A user device that performs radio communication with a radio base station via an access layer, comprising:
a connection controlling unit that controls the user device so as to be in one of a connected state and an idle state; and
a context retaining unit that, when the user device is transitioned from the connected state to the idle state by the connection controlling unit, retains AS context that is a context of the access layer between the user device and the radio base station.

7. The user device as claimed in claim 6, wherein the connection controlling unit, when causing the user device to return to the connected state from the idle state, returns the user device to the connected state by using the AS context retained in the context retaining unit.

8. A communication control method that uses a radio base station that performs radio communication with a user device via an access layer and a mobility management entity that manages mobility of the user device, comprising:
forwarding, when the user device has transitioned from a connected state to an idle state, in which the radio base station forwards to the mobility management entity AS context that is a context of the access layer between the user device and the radio base station;
transmitting in which the mobility management entity transmits the AS context to the radio base station in response to an acquisition request of the AS context from the radio base station; and
causing the radio base station to return the user device to the connected state by using the AS context transmitted from the mobility management entity.
